(19) Europäisches Patentamt
European Patent Office
Office européen des brevets

(11) **EP 1 038 379 B1**

(12) **EUROPEAN PATENT SPECIFICATION**

(45) Date of publication and mention
of the grant of the patent:
**30.07.2008   Bulletin 2008/31**

(51) Int Cl.:
*H04L 27/04* (2006.01)         *H04B 14/04* (2006.01)
*H04L 25/03* (2006.01)         *H04L 25/49* (2006.01)

(21) Application number: **98960216.4**

(22) Date of filing: **13.11.1998**

(86) International application number:
**PCT/US1998/024369**

(87) International publication number:
**WO 1999/034566 (08.07.1999 Gazette 1999/27)**

(54) **METHOD AND APPARATUS OF SELECTING A CONSTELLATION POINT, FOR EACH GROUP OF DATA BITS TO BE TRANSMITTED BY AN ANALOG PCM MODEM**

METHODE UND APPARAT ZUM AUSWÄHLEN EINES KONSTELLATIONSPUNKTES FÜR JEDE GRUPPE VON DATENBITS, WELCHE DURCH EIN ANALOGES PCM-MODEM ÜBERTRAGEN WERDEN SOLLEN

METHODE ET APPAREIL POUR SELECTIONNER UN POINT D'UNE CONSTELLATION POUR CHAQUE GROUPE DE BITS DE DONNEES TRANSMIS PAR UN MODEM PCM ANALOGIQUE

(84) Designated Contracting States:
**DE FR GB IT SE**

(30) Priority: **29.12.1997   US 999254**

(43) Date of publication of application:
**27.09.2000   Bulletin 2000/39**

(73) Proprietor: **MOTOROLA, INC.**
**Schaumburg, IL 60196 (US)**

(72) Inventors:
• **KIM, Dae-young**
  **Lexington, MA 02173 (US)**
• **HUMBLET, Pierre, A.**
  **Cambridge, MA 02139 (US)**

(74) Representative: **Openshaw, Paul Malcolm et al**
**Openshaw & Co.**
**Town Hall Exchange**
**The Town Hall Buildings**
**Castle Street**
**Farnham, Surrey GU9 7ND (GB)**

(56) References cited:
**US-A- 5 388 124          US-A- 5 488 633**
**US-A- 5 546 395          US-A- 5 659 579**

## Description

### Field of the Invention

This invention relates to PCM upstream transmission and more particularly to a system, device and method for PCM upstream transmission utilizing an optimized transmit constellation.

### Background of Invention

Conventional modems, such as V.34 modems, treat the public switched telephone network (PSTN) as a pure analog channel even though the signals are digitized throughout most of the network. In contrast, pulse code modulation (PCM) modems take advantage of the fact that most of the network is digital and that typically central site modems, such as those of internet service providers and on-line services, are connected to the PSTN via digital connections (e.g., T1 in the United States and E1 in Europe). First generation PCM modems transmit data in PCM mode downstream only (i.e., from a central site digital modem to an analog end user modem) and transmit in analog mode, e.g. V.34 mode, upstream (i.e., from the end user modem to the central site modem). Future generation PCM modems will also transmit data upstream in PCM mode.

With PCM downstream, the central site PCM modem transmits over a digital network eight bit digital words (octets) corresponding to different central office codec output levels. At the end user's central office, the octets are converted to analog levels which are transmitted over an analog loop. The end user's PCM modem then converts the analog levels into equalized digital levels. The equalized digital levels are ideally mapped back into the originally transmitted octets and the data the octets represent. With PCM upstream, the end user PCM modem transmits analog levels over the analog loop corresponding to the data to be transmitted and the levels are quantized to form octets by a codec in the end user's central office. The codec transmits the octets to the PCM central site modem over the digital network.

However, due to impairments in the digital network, such as digital trunk loss (in the US, typically 0, 3 or 6 dB) caused by digital padding and robbed bit signaling (hereinafter referred to as RBS), caused by the networks in-band signaling, the octets transmitted both in the upstream and downstream directions may be corrupted. If not accounted for, this can cause high data error rates in the modems.

Methods for effectively detecting and mitigating downstream digital impairments are known. Examples of these methods are described in the following co-pending applications, assigned to the assignee of the present invention: US Patent Application 08/885,710, Scull, Christopher J.T.; Burch, Richard A; System, Device and Method for Detecting and Characterizing Impairments in a Communication Network; filed 6/30/97; US Patent Application 08/730,433, Eyuboglu, M. Vedat; Barabell, Arthur J.; Humblet, Pierre A.; System And Device For, And Method Of, Detecting, Characterizing, And Mitigating Deterministic Distortion In A Communications Network: filed 10/15/96.; US Patent Application entitled, System, Device and Method for Detecting Impairments in a Communication Network, US Patent Application 08/979994, filed 11/26/97; and US Patent Application entitled, Apparatus, System And Method For Transmitting And Receiving A Training Sequence Optimized For Detecting Impairments In A Communication Network, US Patent Application 08/979196, filed 11/26/97.

With upstream transmission, quantization and PCM downstream echo, in addition to upstream digital impairments, add complexity to the PCM encoding and decoding process. In particular, they add complexity to the selection of a constellation of transmit points (transmit constellation) for various upstream channel conditions. Several PCM upstream transmit constellations, for data rates of 24-40 kbps, have been proposed. See Telecommunications Industry Association (TIA), Technical Committee TR-30.1, Committee Contribution Document Number: TR-30.12/96, Proposed Baseline for PCM Upstream, Nuri Dagdeviren (Lucent Technologies), December 4-5, 1996. With these constellations, it is indicated that the effects of hybrid echo and analog loop loss were the primary focus. Thus, depending on the detected echo and analog loop characteristics, a constellation is selected for upstream transmission. However, for their given data rates these constellations do not have optimal error probability (probability that the transmitted constellation points will be improperly decoded by the digital modem). In order to decrease the error probability, the data rate must be sacrificed. Moreover, these constellations are not designed to account for upstream digital impairments encountered in the digital network.

US 5,659,579 discloses a method and apparatus for encoding of symbols with multilevel encoding, where components of the symbols that are more susceptible to errors are encoded more robustly than components that are less susceptible to error. A non-binary constellation of symbols is handled with a fractional bit rate converter that combines with the multilevel encoder to create an effective and efficient constellation of symbols.

US 5,388,124 discloses a precoding scheme for noise whitening on ISI channels where the scheme permits any type of shaping and is compatible with trellis coding. This technique uses a structured vector quantization (SVQ) technique for optimal shaping of the constellation. Optimal (N-sphere) SVQ shaping results in higher shaping gains than those of Voronoi constellations based on known N-dimensional lattices.

Therefore, a need exists for a system, device and method for PCM upstream transmission by an analog PCM modem utilizing an optimized transmit constellation, wherein the transmit constellation is designed with non-uniformly spaced constellation points having substantially equivalent, minimized error probability, point to point, to enable decoding by a digital PCM modem of the constellation points in the presence of PCM downstream echo, quantization and digital impairments while maintaining increased data rates.

**Summary of the Invention**

In a first aspect, the present invention provides a method of selecting, for each group of data bits to be transmitted by an analog pulse code modulation modem, a constellation point corresponding to the group of data bits, as claimed in claim 1.

In a further aspect, the present invention provides an apparatus for selecting, for each group of data bits to be transmitted by an analog pulse code modulation modem, a constellation point corresponding to the group of data bits, as claimed in claim 7.

**Brief Description of the Drawings**

FIG. 1 is a block diagram depicting PCM upstream transmission;

FIG. 2 is an equivalent discrete time block diagram of the block diagram of FIG. 1;

FIG. 3 is a representation of a portion of a $\mu$-law constellation in order to illustrate symbol-by-symbol decoding with a predetermined PCM downstream echo;

FIG. 4 is a representation of a portion of the $\mu$-law constellation of FIG. 3 in order to illustrate symbol-by-symbol decoding with a different predetermined PCM downstream echo;

FIG. 5 depicts a portion of a representation of a $\mu$-law quantizer with a Gaussian noise distribution centered about constellation point $y_k$;

FIG. 6 depicts certain $\mu$-law quantizer thresholds and how the thresholds are altered in the presence of RBS; and

FIG. 7 is a flow diagram illustrating transmit constellation selection according to this invention.

**Detailed Description of a Preferred Embodiment**

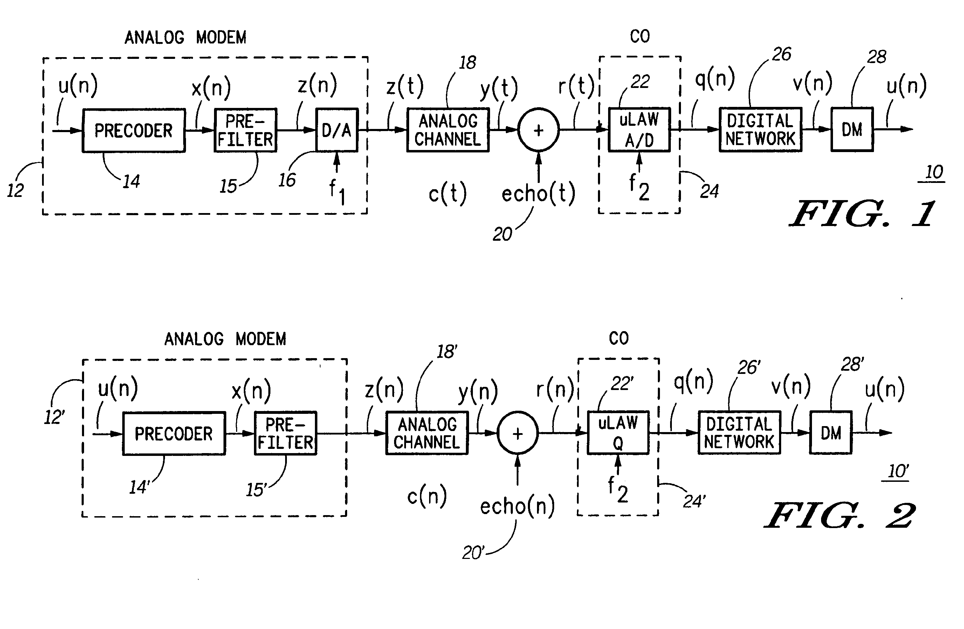

Bi-directional PCM communication is described in US Application Serial No. 08/724,491, entitled Hybrid Digital/ Analog Communication Device, which is assigned to the assignee of the present invention. There is shown in block diagram 10, FIG. 1, an example of PCM upstream transmission in such a bi-directional PCM communication system. There is included analog PCM modem 12, having a precoder 14 and a digital to analog converter (D/A) 16, interconnected to analog channel 18. Precoder 14 receives digital data u(n) and outputs precoded digital data x(n). The precoded digital data is provided to prefilter 25 which outputs filtered signal z(n). Filtered signal z(n) is converted to analog form and is transmitted as signal z(t) over analog channel 18, having a channel characteristic, c(t). The analog channel modifies the transmitted signal z(t) to form signal y(t) which then encounters downstream PCM echo, echo(t) 20, that is added to y (t), producing signal r(t). Signal r(t) is received by $\mu$-law (A-law in some countries outside of the US) quantizer 22 in central office (CO) 24 and is quantized according to the $\mu$-law. See International Telecommunications Union, Recommendation G.711, Pulse Code Modulation (PCM) of Voice Frequencies, 1972.

The quantized octets (digital values), q(n), are transmitted over digital network 26 at a frequency of 8kHz where they may be affected by various digital impairments, as discussed below. The possibly affected octets, v(n), are received by digital PCM modem 28 which ideally decodes the octets, v(n), into their corresponding constellation points, y(t), from which the original digital data, u(n), can be derived.

Before data can be transmitted upstream, the clock ($f_1$) of D/A 16 in analog PCM modem 12 must be synchronized to the clock($f_2$) of CO 24. This can be achieved by learning the clock CO 24 from the downstream PCM signal (not shown) and synchronizing the clocks using the technique proposed in US Patent No. 5,199,046, entitled First and Second Digital Rate Converter Synchronization Device and Method. Once the clocks are synchronized, PCM upstream block diagram 10, FIG. 1, can be represented as equivalent discrete time block diagram 10', FIG. 2, with like components being represented by the same reference numbers containing a prime ('). In block diagram 10' we assume that $f_1=f_2$; however, it must be noted that $f_1$ does not have to be equal to $f_2$ as long as the two clocks are synchronized. When $f_1$ is equal to $f_2$, n is the time index for 8kHz samples, since the clock ($f_2$) of CO 24 is fixed at that frequency.

Precoder 14 (14') and prefilter 15 (15') may be implemented as described in co-pending US Patent Application 08/999249 entitled Device and Method for Precoding Data Signals for Pulse Code Modulation Transmission, filed 29 December 1997, which is assigned to the assignee of the present invention. As explained in co-pending application 08/999249, digital data u(n) may be sent by transmitting z(n) such that the constellation points y(n) will be one of a number of points in an equivalence class for u(n). The point y(n) in the equivalence class of u(n ) that is selected is usually determined to minimize the transmit power which is the power of x(n).

Using the above precoding technique, or another precoding technique, it is difficult to accurately decode u(n) from v(n) in the presence of echo, quantization and digital impairments without a properly designed transmit constellation of points, y(n). It is described below how to design the transmit constellation for y(n) with a certain minimum error probability and a substantially equivalent error probability constellation point to constellation point in order to decode y (n) (and eventually u(n)) from v(n) in the presence of echo, quantization and digital impairments, while maintaining an increased data rate. The constellation design according to this invention is not restricted to the above described precoding schemes and may be utilized with various precoding schemes.

**Optimized Constellation Design**

Initially, the design of a transmit constellation (points y(n)), according to this invention, is described assuming there are no digital impairments in the digital network 26', FIG. 2, i.e., q(n) = v(n). Then, this technique is generalized in order to demonstrate how the constellation points are selected for a constellation when there are digital impairments in network 26'. The constellations are designed to achieve a predetermined, minimized error probability which probability is substantially equivalent point to point in the constellation.

The technique for designing an optimized constellation according to this invention is dependent upon the decoding scheme utilized by digital modem 28'. It will first be shown how to design the constellation assuming no channel coding to y(n) and symbol-by-symbol decoding. Then, the constellation design is generalized to the case when there is channel coding to y(n) and the digital modem 28' employs a sequence based decoding scheme, such as a Viterbi decoding algorithm. See, e.g., Lee, A.E., and Messerschmitt, D.G.; "Digital Communication", Kluwer Academic Publishers, 1994.

Symbol-by-Symbol decoding

As an example, it is assumed that $\{y_0, y_1, ..., y_{M-1}\}$ are the M constellation points for y(n). When digital modem 28' receives v(n), and has an estimation of the downstream PCM echo, echo(n) 20', FIG. 2, then digital modem 28' can decode which y(n) has been transmitted by finding the most probable $y_i$, i.e.:

$$\underset{y_i}{\text{Max}} \ \Pr(v(n) \mid y_i , echo(n)) \qquad (1)$$

Assuming no digital impairments, the most probable $y_i$ is the $y_i$ that is closest in value to v(n) - echo(n) and this may be determined as follows:

$$\underset{y_i}{\text{Min}} \ |v(n) - (y_i + echo(n))| \qquad (2)$$

That is, the most probable $y_i$ is the $y_i$ which minimizes v(n) - (y_i + echo(n)). With digital impairments the most probable $y_i$ may be determined as follows:

$$\underset{y_i}{\text{Min}} \ |vq(n) - (y_i + echo(n))| \qquad (3)$$

The echo estimation, echo(n), and vq(n), virtual quantizer points, are determined by digital modem 28', as described in co-pending application entitled Device and Method for Detecting PCM Upstream Digital Impairments in a Communication Network, US 6,181,752, filed on even date herewith.

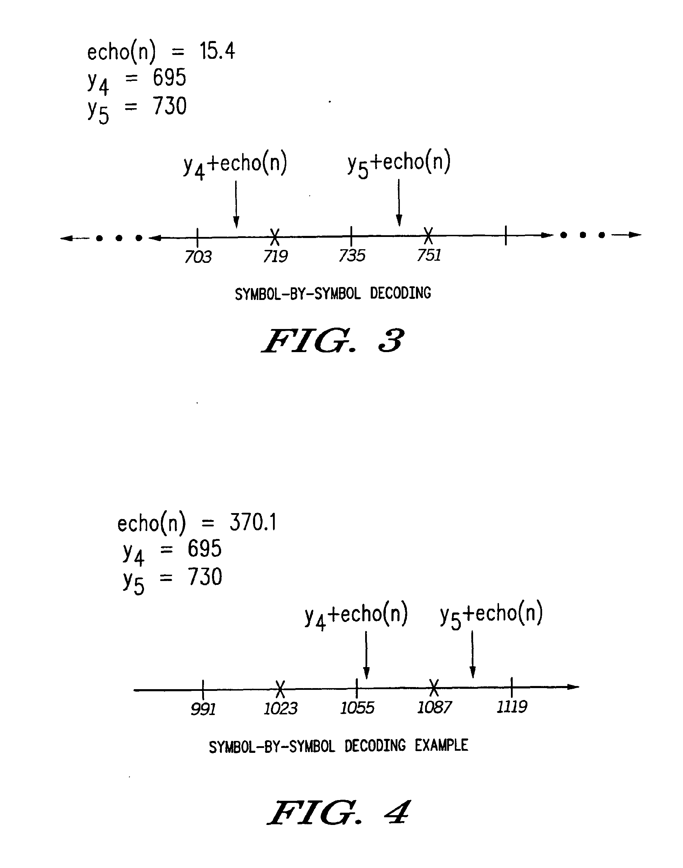

The decoding process may be better understood by observing the symbol-by-symbol decoding example depicted in FIG. 3. In this figure, the "x" marks in the axis represent $\mu$-law quantized levels and the "|" marks in the axis represent the $\mu$-law threshold levels. As is known in the art, there are 255 $\mu$-law quantized levels which have predefined thresholds. Of course, FIG. 3 depicts only a small portion of all of the possible $\mu$-law quantized levels. In this example, it is assumed that a certain constellation has points $y_4 = 695$ and $y_5 = 730$ and the estimation of the PCM downstream echo, echo(n) is 15.4. If digital modem 28' receives v(n) = 751, it will be determined that $y_5$ has been transmitted since, in the presence of noise, $y_5$ has the highest probability of being the transmitted constellation point, given echo(n), as it is the only point falling between the thresholds surrounding $\mu$-law quantized level, v(n)= 751.

Another example using the same constellation points is shown in FIG. 4. In this example, however, the estimation of the PCM downstream echo, echo(n), is 370.1. In this case, for both constellation points, $y_4$ and $y_5$, transmitted digital modem 28' will receive v(n) = 1087. As a result, digital modem 28' may have difficulty distinguishing between constellation points $y_4$ and $y_5$ and, therefore, there is a high error probability for these constellation points.

The transmit constellation should be designed such that this kind of error, which occurs when y(n) + echo(n) falls where the step size is large for the $\mu$-law quantizer, occurs rarely enough to achieve some target minimized error probability (e.g., $P_e = 10^{-6}$). This can be achieved by increasing the distance between the constellation points. However, this will reduce the number of points that can be used in the constellation (since there are a finite number of $\mu$-law quantized levels) which reduces the data rate. And, increasing the distance between the constellation points also increases the overall transmit power in analog modem 12', FIG. 2.

With the constellation design of the present invention it is shown how to achieve the highest data rate (i.e., the largest number of constellation points, y(n)) and still achieve a certain, minimized overall target error probability, and a substantially equivalent error probability point to point. As is shown in the above examples, PCM downstream echo, echo(n), has a significant effect on the error probability of a constellation design. As will be evident from the following constellation design algorithm, different constellations are needed for different echo and noise characteristics (like variance of echo and noise.)

Constellation Design Algorithm for Symbol-by-Symbol Decoding

The constellation design described herein is symmetrical, in that the $y_M$ constellation points are divided into positive constellation points $\{y_0, y_1, ...y_{M-1/2}\}$ and negative constellation points $\{-y_{M-1/2}...-y_1, -y_0\}$; however it may be designed asymmetrically. The design algorithm is recursive, i.e., assuming $y_0, y_1, ..., y_{k-1}$, have already been determined according to this algorithm, $y_k$ is designed such that the following conditions are satisfied:

$$\Pr(...,y_0,y_1,...,y_{k-1} \quad \text{decoded} \mid y_k \text{ sent })\hat{} < (10^{-6})/2 \text{ and} \qquad (4a)$$

$$\Pr(y_k,y_{k+1},... \quad \text{decoded} \mid y_{k-1} \text{ sent })\hat{} \quad < (10^{-6})/2 \qquad (4b)$$

This assumes that $10^{-6}$ error probability is the desired target error probability for each point, $y_k$ in the constellation. This target error probability is exemplary and other error probabilities could be used. Note that each of the single sided error probabilities, namely, the left hand side (LHS) error probability in equation 4a and the right hand side (RHS) error probability in equation 4b are smaller than half of the target symbol error probability. This guarantees that the double sided error probability is less than the target error probability.

Equation 4a requires that the probability that any points in the constellation which are smaller than the present point, $y_k$, being selected are decoded given the present point, $y_k$, being transmitted is less than one half the target error probability. Equation 4b requires that the probability that any points in the constellation which are larger that the previous point, $y_{k-1}$, are decoded given the previous point, $y_{k-1}$, being transmitted is less than one half the target error probability.

The Probability $\Pr(\ddot{O},y_0,y_1,\ddot{O},y_{k-1}$ decoded $\mid y_k$ sent ) can be calculated as follows:

$$\Pr(\ddot{O},y_0,y_1,..,y_{k-1} \text{ decoded} \mid y_k \text{ sent}) = \qquad (5)$$

$$\int_{-\infty}^{\infty} \Pr(y_0,y_1,\ddot{O},y_{k-1} \text{decoded} \mid y_k \text{ sent}, e) P_E(e) de$$

where e is the PCM downstream echo, echo(n), and should be integrated e = -∞ to ∞. The integration of e can be approximated to a summation of small intervals of e.

For the probability of echo, i.e. $P_E(e)$, we can assume Gaussian distribution (The constellation will be different if we assume a different distribution for echo), which is

$$P_E(e) = \frac{1}{\sqrt{2\pi}\sigma_e} \exp(-\frac{e^2}{2\sigma_e^2}) \qquad (6)$$

where $\sigma_e^2$ is the echo variance determined by digital modem 28', as described in co-pending application CX097029.

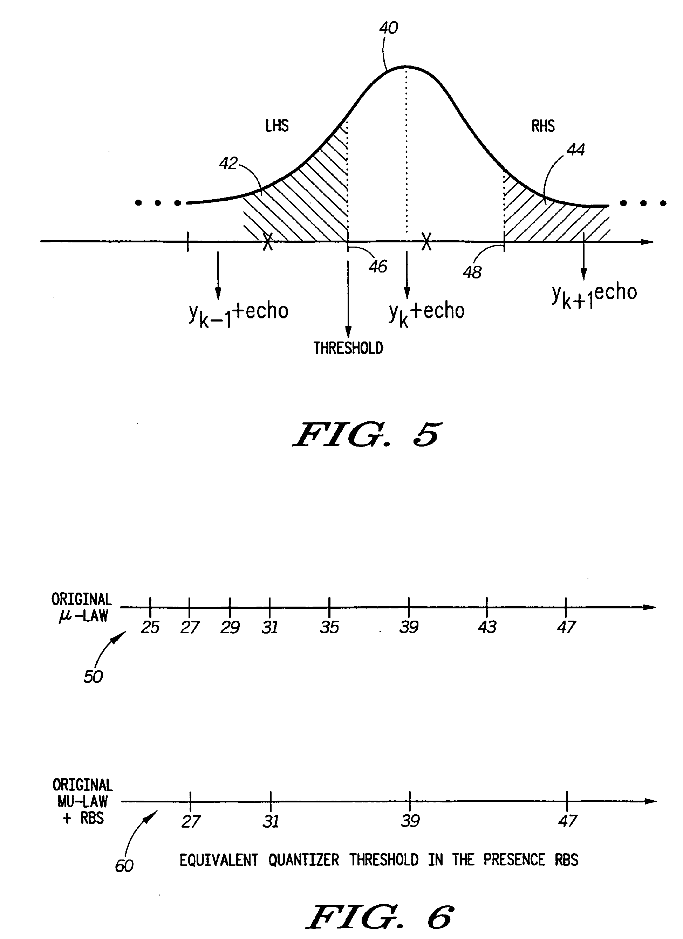

In FIG. 5 there is shown an assumed Gaussian distribution for noise 40 centered about the constellation point $y_k$ + echo. The areas 42 and 44 under distribution 40, beyond quantizer thresholds 46 and 48, provide the error probabilities for the LHS and RHS, respectively. For example, the area 42 under curve 40 is the probability that $y_k$ + echo + noise < threshold 46. From FIG. 5, it can determined how to calculate Pr(..,$y_0$,$y_1$,Ö,$y_{k-1}$, decoded I $y_k$ sent, e) assuming some distribution for noise (like Gaussian distribution for noise 40), as follows:

$$\text{Pr}(..,y_0,y_1,Ö,y_{k-1} \text{ decoded I } y_k \text{ sent, e}) = \qquad (7)$$

$$\text{Q\_fcn} (((y_k+e)\text{-Threshold}) / \sigma_n)$$

See, e.g., Shanmugan, K.S and Breipohl, A.M., "Random Signals : Detection, Estimation, and Data Analysis", John Wiley & Sons, 1988, for the definition of Q_fcn. The variable "Threshold" is the μ-law quantizer threshold where the μ-law level higher (lower) than this threshold will be decoded as $y_k$ ($y_{k-1}$), such as threshold 46, FIG. 5. The variable $\sigma_n^2$ is the variance of noise. This noise can come from additive channel noise, intersymbol interference from imperfect precoding, and imperfect echo estimation. The variance of noise can be calculated as follows.

The noise, $\sigma_n^2$, is the noise component right before the μ-law quantizer. The noise consists of three components, namely: i) ISI due to imperfect precoding (i.e. p(n) is not exactly c(n)*g(n)) and/or the estimation of c(n) is not perfect), ii) echo estimation error, and iii) random channel noise.

The calculation of $\sigma_n^2$ is consists of three components. The variable $\sigma_n^2$ can be calculated as follows:

$$\sigma_n^2 = \sigma_{ISI}^2 + \sigma_{eE}^2 + \sigma_{noise}^2 , \qquad (8)$$

where $\sigma_{ISI}^2$ is the variance of ISI, $\sigma_{eE}^2$ is the variance of echo estimation error, and $\sigma_{noise}^2$ is the variance of random channel noise. The variance of ISI can be calculated in the analog modem as follows:

$$\sigma_{ISI}^2 = E_x \left\| g * c - p \right\|^2 \qquad (9)$$

where Ex is the power of x. We can use -9dBm/lgl[2] which is the limit imposed by FCC or some other limit like -10dBm/lgl[2] that we intend to use. Note that this does not include the error term due to imperfect estimation of c(n). We can increase $\sigma_{ISI}^2$ to take this into account.

The terms $\sigma_{eE}^2 + \sigma_{noise}^2$ are typically calculated in the digital modem as follows. We assume the digital impairments have been detected. In half duplex mode, from the received signal v(n), we first find out the candidates for r(n). For example, if RBS1=No RBS, digital loss=0dB, RBS2=1, then for one v(n), we have two possible r(n)'s. For each v(n), calculate d(n) which is d(n) = r(n) - *ê*(*n*) where r(n) is chosen to give smaller absolute value for d(n) and *ê*(*n*) is the estimated echo. Since d(n) not only contains the echo estimation error and random channel noise but also contains the quantization noise. Therefore, we have to take this into account as follows:

$$\sigma_{eE}^2 + \sigma_{noise}^2 = \sigma_d^2 - \sigma_q^2,\qquad(10)$$

where $\sigma_q^2$ is the quantization noise variance. This can be calculated as the average of quantization noise variance of each r(n).

$$\sigma_q^2 = \frac{1}{N}\sum_{n=0}^{N-1}(stepSize(r(n)))^2 \Big/ 12\qquad(11)$$

where step size(r(n)) is the $\mu$-law quantization step size where r(n) resides. For example, if r(n)=99 in linear value then step size(r(n))=8.)

We can run the above $\sigma_{eE}^2 + \sigma_{noise}^2$ calculation algorithm only when $|r(n)| \leq$ MAX, e.g. MAX=93 which will make step size(r(n)) $\leq$ 4, to make it more accurate.

From equations (5), (6) and (7) above, the Probability Pr(Ö,$y_0$,$y_1$,Ö,$y_{k-1}$, decoded I $y_k$ sent ) is as follows:

$$\int_{-\infty}^{\infty} Q\_fcn(\frac{y_k + e - Threshold}{\sigma_n})\frac{1}{\sqrt{2\pi}\sigma_e}e^{\frac{-e^2}{2\sigma_e^2}}de\qquad(12)$$

where equation (12) is approximated as follows:

$$\frac{\Delta}{2M+1}\sum_{j=-M}^{M} Q\_fcn(\frac{y_k + j\Delta - Threshold}{\sigma_n})\frac{1}{\sqrt{2\pi}\sigma_e}e^{\frac{-(j\Delta)^2}{2\sigma_e^2}}\qquad(13)$$

The integration of equation (12) can be approximated to a summation of small intervals of e as illustrated in equation (13). M is chosen large enough such that $e^{\frac{-(M\Delta)^2}{2\sigma_e^2}}$ is approximately equal to zero. See, e.g., Kreystig, E., "Advanced Engineering Mathematics", John Wiley & Sons, 1983.

The RHS error probability can be calculated in the same way to determine the present point, $y_k$. This recursive process continues until $y_k$ reaches the largest point that $\mu$-law can support which is 8031. Since it is a recursive algorithm, the initial constellation points -$y_0$,$y_0$ must be determined first. This can be done by finding $y_0$ that satisfies the following conditions:

$$Pr(-y_0 \text{ decoded I } y_0 \text{ sent }) < (10^{-6})/2 \text{ and}\qquad(14a)$$

$$Pr(y_o \text{ decoded} \mid -y_o \text{ sent}) < (10^{-6})/2 \qquad (14b)$$

Again, this assumes that $10^{-6}$ error probability is the desired target error probability for each point $y_k$ in the constellation. Note that each of the single sided error probabilities, namely, the left hand side (LHS) error probability in equation 14a and the right hand side (RHS) error probability in equation 14b are smaller than half of the target symbol error probability. This guarantees that the double sided error probability is less than the target error probability. Equation 14a requires that the probability that $-y_o$ is decoded given that $y_0$ is transmitted is less than one half the target error probability. Equation 14b requires that the probability that $y_0$ is decoded given that $-y_o$ is transmitted is less than one half the target error probability.

The constellation design algorithm according to this invention for designing a constellation with points $\{-y_{M-1/2}\ldots, -y_2, -y_1, -y_o, y_o, y_1, y_2, \ldots y_{M-1/2}\}$ given an echo, echo(n), having a variance $\sigma_e^2$ and a noise variance, $\sigma_n^2$, may be summarized as follows:

1) Find $y_o$ that satisfies:
$Pr(-y_o \text{ decoded} \mid y_o \text{ sent}) < 10^{-6}/2$ and $Pr(y_o \text{ decoded} \mid -y_o \text{ sent}) < 10^{-6}/2$;

2) let k=1 initially;

3) Find $y_k$ that satisfies
$Pr(..,y_o,y_1,...,y_{k-1}, \text{ decoded} \mid y_k \text{ sent}) < 10^{-6}/2$ and $Pr(y_k,y_{k+1},... \text{ decoded} \mid y_{k-1} \text{ sent}) < 10^{-6}/2$; and

4) If $y_k <$ MAX_CONSTELL_LEVEL (e.g. 8031 ), k=k+1 and Go to 3) else STOP.

There is shown in Table 1 an example of a constellation assuming $\sigma_n = 7$, and $\sigma_e = 150$ and in the presence of no digital impairments. Only the positive constellation points are shown. It is preferred that the values for y(n) be integers; however, this is not required.

Table 1

37, 113, 192, 275, 361, 450, 544, 646, 755, 870, 988,
1108, 1229, 1351,1479, 1634, 1804, 1982, 2164, 2348, 2532,
2716, 2900, 3084, 3268, 3452, 3722,4022, 4331, 4640, 4949,
5258, 5567, 5876, 6185, 6494, 6803, 7112, 7422, 8287

Constellation Design Algorithm for Channel Coded y(n) and Sequence Decoding

For channel coding and sequence decoding, the same constellation design algorithm may be used. The only difference is in how to calculate the LHS and RHS error probabilities delineated above in equations 4a and 4b. These calculations will depend on the particular code being used and those skilled in the art will be able to make the appropriate calculations given the coding being used.

However, if calculating the error probability in the presence of coding is too difficult, or not desired, then the error probability bound instead of the real error probability may be used. A good error probability bound can be found in the following references: Viterbi, A.J.; Omura, J.K.; Principles of Digital Communication and Coding, McGraw-Hill, 1979; and Herzberg, H.; Saltzberg, B.R.; Coding for a Channel with Quantization in the Presence of an Estimable Interference, IEEE Transactions on Communications, vol. 45,pp.45-51, January 1997.
With sequence based decoding y(n) may be decoded as follows: y(n-D), y(n D-1 ),...,y(n-D-Ny), is chosen to minimize the following equation:

$$Pr(v(n),v(n-I),... ,v(n-N_v) \mid y(n-D),...,y(n-D-N_y), \text{ echo}(n),...,\text{echo}(n-N_e)) \qquad (15)$$

The exact calculation of this probability is very complex and therefore, in practice, a less complex algorithm like the Viterbi algorithm may be used.

In Herzberg, H. and Saltzberg. B.R., "Coding for a Channel with Quantization in the Presence of an Estimable Interference", IEEE Transactions on Communications, Vol. 45, No. 1, January 1997, coding for upstream mode, assuming

a constellation of μ-law levels, is described. The constellations according to this invention do not necessarily use μ-law levels; however, the coding theories are readily applicable to these constellations.

Constellation Design when there is Digital impairment in the Digital Network

The above description of constellation design according to this invention does not account for digital impairments in the digital network. The detection of upstream digital impairments (i.e. RBS and digital loss) is described in co-pending application US 6,181,752. The upstream digital impairments detected by digital modem 28' are communicated to analog modem 12'. Then, using the detected digital impairments and μ-law quantizer 22' a new quantizer, i.e. new threshold levels, can be modeled. For example, if there is odd robbed bit signaling (RBS) in digital network 26', i.e. the type that forces the least significant bit of the affected octets to a "I", then the original μ-law quantizer, see partial representation 50, FIG. 6, is modified to account for RBS to form a new equivalent quantizer, see partial representation 60, FIG. 6. The same constellation design algorithm, as described above, is used but with the new equivalent quantizer thresholds.
An equivalent quantizer can be modeled in the same manner for any RBS and digital loss combination in the upstream channel detected by digital modem 28'.
A symbol-by-symbol decoder in digital modem 28', will work in the presence of digital impairments as follows. Once it receives v(n), it can determine the possible range of r(n) as it will have the equivalent quantizer. From the range of r(n), the decoder can determine which constellation point, $y_i$, was the most likely transmitted point, as described above in equations (1)-(3) above, and from the constellation point the transmitted data, u (n), can be recovered. Sequence based decoding in the presence of digital impairments may be similarly accomplished and will be apparent to those skilled in the art..
There is shown in Table 2 an example of a constellation for use when RBS is present in digital network 26'. Note that the constellation is the same with LSB=0 and LSB=1 because the equivalent quantizer thresholds are the same for both RBS conditions. The constellation design also assumes that $\sigma_n$= 7.0, and $\sigma_e$ = 150.0. Only the positive constellation points are shown.

Table 2

49, 152, 262, 378, 520, 682, 856, 1036, 1219, 1403, 1673,
1973, 2282, 2591, 2900, 3209, 3518, 4056, 4620, 5184, 5747,
6309, 6871, 7434, 8287

**Constellation Selection**

For data mode, i.e. when analog modem 12' transmits data to digital modem 28', one transmit constellation of a number of constellations that have been predetermined according to the above described algorithm for various digital impairments, noise variance, $\sigma_n^2$, and echo variance, $\sigma_e^2$, is selected for transmission of data for each RBS time slot. The selection of the transmit constellations may be done by either the analog modem or the digital modem.
In a preferred embodiment, digital modem 28' determines and transmits to analog modem 12' the type of digital impairments affecting the upstream channel and the echo variance. Then, since the calculation of the noise variance,

$\sigma_n^2$, is complex it is done partially in digital modem 28' $\left( \sigma_{eE}^2 + \sigma_{noise}^2 \right)$ and partially in analog modem 12' ($\sigma_{ISI}^2$). It is possible that the noise variance, $\sigma_n^2$, be calculated completely in the digital modem. From the digital impairments, echo varaince and noise variance a transmit constellation is selected for each time slot.

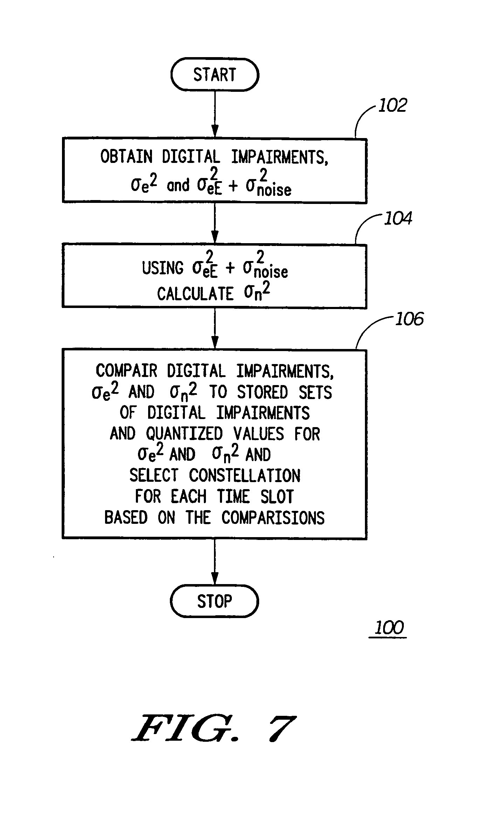

As depicted in flow diagram 100, FIG. 7, the digital impairments, echo variance, $\sigma_e^2$, and $\sigma_{eE}^2 + \sigma_{noise}^2$ are obtained, step 102. In step 104, using $\sigma_{eE}^2 + \sigma_{noise}^2$ the noise variance, $\sigma_n^2$, is calculated. In step 106, the digital impairments and $\sigma_e^2$ and $\sigma_n^2$ are compared to stored sets of digital impairments and quantized values for $\sigma_e^2$ and $\sigma_n^2$. For each stored set there is stored a pre-calculated constellation and for each RBS time slot a stored constellation is selected based on the comparisons. The selected constellations are those with the stored digital impairments and stored $\sigma_e^2$ and $\sigma_n^2$ having values greater than the calculated $\sigma_e^2$ and $\sigma_n^2$.
It should be noted that this invention may be embodied in software and/or firmware which may be stored on a computer useable medium, such as a computer disk or memory chip.

**Claims**

1. A method of selecting, for each group of data bits to be transmitted by an analog pulse code modulation modem (12), a constellation point corresponding to the group of data bits; the method is **characterized by**:

   obtaining digital impairments;
   obtaining echo variance;
   obtaining a sum of variance of echo estimation error and variance of random channel noise;
   calculating noise variance using the sum of variance of echo estimation error and variance of random channel noise;
   comparing between the digital impairments, a sum of echo variance and noise variance, and stored sets of digital impairments and quantized values for echo variance and noise variance, wherein for each stored set there is stored a pre-calculated constellation and for each robbed bit signaling time slot a stored constellation is selected based on the comparisons; and
   selecting those constellations with the stored digital impairments and stored sum of echo variance and noise variance having values greater than the calculated sum of echo variance and noise variance.

2. The method of claim 1, wherein the step of selecting is performed by the analog modem (12).

3. The method of claim 1, wherein the step of selecting is performed by a digital pulse code modulation modem (28).

4. The method of claim 1, wherein a digital pulse code modulation modem (28) determines and transmits to the analog modem (12) the type of digital impairments affecting an upstream channel and the echo variance.

5. The method of claim 4, wherein the calculation of the noise variance is done partially in the digital modem (28) and partially in the analog modem (12).

6. The method of claim 4, wherein the calculation of the noise variance is done completely in the digital modem (28).

7. Apparatus for selecting, for each group of data bits to be transmitted by an analog pulse code modulation modem (12), a constellation point corresponding to the group of data bits; the apparatus is **characterized by**:

   means for obtaining digital impairments;
   means for obtaining echo variance;
   means for obtaining a sum of variance of echo estimation error and variance of random channel noise;
   means for calculating noise variance using the sum of variance of echo estimation error and variance of random channel noise;
   means for comparing between the digital impairments, a sum of echo variance and noise variance, and stored sets of digital impairments and quantized values for echo variance and noise variance, wherein for each stored set there is stored a pre-calculated constellation and for each robbed bit signaling time slot a stored constellation is selected based on the comparisons; and
   means for selecting those constellations with the stored digital impairments and stored sum of echo variance and noise variance having values greater than the calculated sum of echo variance and noise variance.

8. The apparatus of claim 7, wherein the means for selecting is in the analog modem (12).

9. The apparatus of claim 7, wherein the means for selecting is in a digital pulse code modulation modem (28).

10. The apparatus of claim 7, wherein a digital pulse code modulation modem (28) comprises means for determining and transmitting to the analog modem (12) the type of digital impairments affecting an upstream channel and the echo variance.

11. The apparatus of claim 10, wherein the digital modem (28) and the analog modem (12) comprise respective parts of the means for calculating noise variance.

12. The apparatus of claim 10, wherein the digital modem (28) comprises the means for calculating noise variance.

**Patentansprüche**

1. Verfahren zum Auswählen eines Konstellationspunkts, der der Gruppe an Datenbits entspricht, für jede Gruppe an Datenbits, die durch ein analoges Pulscodemodulationsmodem (12) übertragen werden sollen; wobei das Verfahren **gekennzeichnet ist durch**:

   Erhalten von digitalen Schwachstellen;
   Erhalten von Echostreuung;
   Erhalten einer Summe aus Streuung von Echobewertungsfehler und Streuung von statistischem Kanalrauschen;
   Berechnen der Rauschstreuung unter Verwendung der Summe aus Streuung von Echobewertungsfehler und Streuung von statistischem Kanalrauschen;
   Vergleichen einer Summe aus Echostreuung und Rauschstreuung und gespeicherten Sätzen an digitalen Schwachstellen und quantifizierten Werten für Echostreuung und Rauschstreuung zwischen den digitalen Schwachstellen, wobei für jeden gespeicherten Satz eine im Voraus berechnete Konstellation gespeichert ist und für jeden geraubten Bitsignalisierungszeitschlitz eine gespeicherte Konstellation auf der Basis der Vergleiche ausgewählt ist; und
   Auswählen derjenigen Konstellationen mit den gespeicherten digitalen Schwachstellen und der gespeicherten Summe aus Echostreuung und Rauschstreuung mit größeren Werten als die berechnete Summe aus Echostreuung und Rauschstreuung.

2. Verfahren nach Anspruch 1, wobei der Schritt des Auswählens durch das analoge Modem (12) durchgeführt wird.

3. Verfahren nach Anspruch 1, wobei der Schritt des Auswählens durch ein digitales Pulscodemodulationsmodem (28) durchgeführt wird.

4. Verfahren nach Anspruch 1, wobei ein digitales Pulscodemodulationsmodem (28) den Typ an digitalen Schachstellen, der einen Kanal stromaufwärts und die Echostreuung beeinträchtigt, bestimmt und zum analogen Modem (12) überträgt.

5. Verfahren nach Anspruch 4, wobei die Berechnung der Rauschstreuung teilweise im digitalen Modem (28) und teilweise im analogen Modem (12) erfolgt.

6. Verfahren nach Anspruch 4, wobei die Berechnung der Rauschstreuung vollständig im digitalen Modem (28) erfolgt.

7. Gerät zum Auswählen eines Konstellationspunkts der der Gruppe an Datenbits entspricht, für jede Gruppe an Datenbits, die durch ein analoges Pulscodemodulationsmodem (12) übertragen werden sollen; das Verfahren ist **gekennzeichnet durch**:

   Mittel zum Erhalten von digitalen Schwachstellen;
   Mittel zum Erhalten von Echostreuung;
   Mittel zum Erhalten einer Summe aus Streuung von Echobewertungsfehler und Streuung von statistischem Kanalrauschen;
   Mittel zum Berechnen der Rauschstreuung unter Verwendung der Summe aus Streuung von Echobewertungsfehler und Streuung von statistischem Kanalrauschen;
   Mittel zum Vergleichen einer Summe aus Echostreuung und Rauschstreuung und gespeicherten Sätzen an digitalen Schwachstellen und quantifizierten Werten für Echostreuung und Rauschstreuung zwischen den digitalen Schwachstellen, wobei für jeden gespeicherten Satz eine im Voraus berechnete Konstellation gespeichert ist und für jeden geraubten Bitsignalisierungszeitschlitz eine gespeicherte Konstellation auf der Basis der Vergleiche ausgewählt ist; und
   Mittel zum Auswählen derjenigen Konstellationen mit den gespeicherten digitalen Schwachstellen und der gespeicherten Summe aus Echostreuung und Rauschstreuung mit größeren Werten als die berechnete Summe aus Echostreuung und Rauschstreuung.

8. Gerät nach Anspruch 7, wobei das Mittel zum Auswählen im analogen Modem (12) ist.

9. Gerät nach Anspruch 7, wobei das Mittel zum Auswählen in einem digitalen Pulscodemodulationsmodem ist (28).

10. Gerät nach Anspruch 7, wobei ein digitales Pulscodemodulationsmodem (28) Mittel zum Bestimmen und Übertragen des Typs an digitalen Schwachstellen, der einen Kanal stromaufwärts und die Echostreuung beeinträchtigt, zum analogen Modem (12) umfasst.

**11.** Gerät nach Anspruch 10, wobei das digitale Modem (28) und das analoge Modem (12) jeweils Teile des Mittels zum Berechnen der Rauschstreuung umfassen.

**12.** Gerät nach Anspruch 10, wobei das digitale Modem (28) das Mittel zum Berechnen der Rauschstreuung umfasst.

**Revendications**

**1.** Procédé de sélection, pour chaque groupe de bits de données devant être transmis par un modem à modulation par codage d'impulsions analogique (12), d'un point de constellation correspondant au groupe de bits de données ; le procédé étant **caractérisé par** les opérations consistant à :

- obtenir des dégradations numériques ;
- obtenir une variance d'écho ;
- obtenir une somme de variance d'erreur d'estimation d'écho et de variance de bruit de canal aléatoire ;
- calculer une variance de bruit à l'aide de la somme de la variance d'erreur d'estimation d'écho et de la variance de bruit de canal aléatoire ;
- comparer entre les dégradations numériques, une somme de variance d'écho et de variance de bruit, et des ensembles stockés de dégradations numériques et des valeurs quantifiées pour une variance d'écho et une variance de bruit, dans lequel pour chaque ensemble stocké, il est stocké une constellation pré-calculée où pour chaque intervalle de temps de signalisation par réassignation de bit, une constellation stockée est sélectionnée sur la base des comparaisons ; et.
- sélectionner les constellations présentant les dégradations numériques stockées et la somme stockée de variance d'écho et de variance de bruit ayant des valeurs supérieures à la somme calculée de variance d'écho et de variance de bruit.

**2.** Procédé selon la revendication 1, dans lequel l'étape de sélection est effectuée par le modem analogique (12).

**3.** Procédé selon la revendication 1, dans lequel l'étape de sélection est effectuée par un modem à modulation par codage d'impulsions numérique (28).

**4.** Procédé selon la revendication 1, dans lequel un modem à modulation par codage d'impulsions numérique (28) détermine et transmet au modem analogique (12) le type de dégradations numériques affectant un canal en amont et la variance d'écho.

**5.** Procédé selon la revendication 4, dans lequel le calcul de la variance de bruit esL effectué partiellement dans le modem numérique (28) et partiellement dans le modem analogique (12).

**6.** Procédé selon la revendication 4, dans lequel le calcul de la variance de bruit est effectué complètement dans le modem numérique (28).

**7.** Appareil pour sélectionner, pour chaque groupe de bits de données devant être transmis par un modem à modulation par codage d'impulsions analogique (12), un point de constellation correspondant au groupe de bits de données ; l'appareil étant **caractérisé par** :

- des moyens d'obtention des dégradations numériques ;
- des moyens d'obtention d'une variance d'écho ;
- des moyens d'obtention d'une somme de variance d'erreur d'estimation d'écho et de variance de bruit de canal aléatoire ;
- des moyens de calcul d'une variance de bruit à l'aide de la somme de variance d'erreur d'estimation d'écho et de variance de bruit de canal aléatoire ;
- des moyens de comparaison entre les dégradations numériques, une somme de variance d'écho et de variance de bruit, et des ensembles stockés de dégradations numériques et de valeurs quantifiées pour une variance d'écho et une variance de bruit, dans lequel pour chaque ensemble stocké, il est stocké une constellation pré-calculée et pour chaque intervalle de temps de signalisation par réassignation de bit, une constellation stockée est sélectionnée sur la base des comparaisons : et
- des moyens de sélection des constellations avec les dégradations numériques stockées et la somme stockée de variance d'écho et de variance de bruit ayant des valeurs supérieures à la somme calculée de variance d'écho et de variance de bruit.

8. Appareil selon la revendication 7, dans lequel les moyens de sélection se situent dans le modem analogique (12).

9. Appareil selon la revendication 7, dans lequel les moyens de sélection sont dans un modem à modulation par codage d'impulsions numérique (28).

10. Appareil selon la revendication 7, dans lequel un modem à modulation par codage d'impulsions numérique (28) comprend des moyens de détermination et de transmission au modem analogique (12) du type de dégradations numériques affectant un canal en amont et la variance d'écho.

11. Appareil selon la revendication 10, dans lequel le modem numérique (28) et le modem analogique (12) comprennent des parties respectives des moyens de calcul de variance de bruit.

12. Appareil selon la revendication 10, dans lequel le modem numérique (28) comprend les moyens de calcul de variance de bruit.

*FIG. 1*

*FIG. 2*

$$echo(n) = 15.4$$
$$y_4 = 695$$
$$y_5 = 730$$

SYMBOL-BY-SYMBOL DECODING

*FIG. 3*

$$echo(n) = 370.1$$
$$y_4 = 695$$
$$y_5 = 730$$

SYMBOL-BY-SYMBOL DECODING EXAMPLE

*FIG. 4*

FIG. 5

EQUIVALENT QUANTIZER THRESHOLD IN THE PRESENCE RBS

FIG. 6

START

OBTAIN DIGITAL IMPAIRMENTS, $\sigma_e^2$ and $\sigma_{eE}^2 + \sigma_{noise}^2$

_102

USING $\sigma_{eE}^2 + \sigma_{noise}^2$ CALCULATE $\sigma_n^2$

_104

COMPAIR DIGITAL IMPAIRMENTS, $\sigma_e^2$ AND $\sigma_n^2$ TO STORED SETS OF DIGITAL IMPAIRMENTS AND QUANTIZED VALUES FOR $\sigma_e^2$ AND $\sigma_n^2$ AND SELECT CONSTELLATION FOR EACH TIME SLOT BASED ON THE COMPARISIONS

_106

STOP

100

# FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 08885710 B
- US 08730433 B, Eyuboglu, M. Vedat; Barabell, Arthur J.; Humblet, Pierre A.
- US 08979994 B
- US 08979196 B
- US 5659579 A

- US 5388124 A
- US 724491 A
- US 5199046 A
- US 08999249 B
- US 6181752 B

**Non-patent literature cited in the description**

- **SCULL, CHRISTOPHER J.T. ; BURCH, RICHARD A.** *System, Device and Method for Detecting and Characterizing Impairments in a Communication Network,* 30 June 1997
- *System And Device For, And Method Of, Detecting, Characterizing, And Mitigating Deterministic Distortion In A Communications Network,* 15 October 1996
- **LEE, A.E. ; MESSERSCHMITT, D.G.** Digital Communication. Kluwer Academic Publishers, 1994
- **SHANMUGAN, K.S ; BREIPOHL, A.M.** Random Signals : Detection, Estimation, and Data Analysis. John Wiley & Sons, 1988

- **KREYSTIG, E.** Advanced Engineering Mathematics. John Wiley & Sons, 1983
- **VITERBI, A.J. ; OMURA, J.K.** Principles of Digital Communication and Coding. McGraw-Hill, 1979
- **HERZBERG, H. ; SALTZBERG, B.R.** Coding for a Channel with Quantization in the Presence of an Estimable Interference. *IEEE Transactions on Communications,* January 1997, vol. 45, 45-51
- **HERZBERG, H. ; SALTZBERG. B.R.** Coding for a Channel with Quantization in the Presence of an Estimable Interference. *IEEE Transactions on Communications,* January 1997, vol. 45 (1